# EUROPEAN PATENT APPLICATION

(11) **EP 4 583 086 A1**
(43) Date of publication of application: **09.07.2025**
(21) Application number: 23903869.8
(22) Date of filing: 05.12.2023
(51) Int. Cl.: G09G 3/20, G09G 3/32

(54) **DISPLAY DEVICE USING DITHER MASK AND CONTROL METHOD THEREOF**

(30) Priority: 15.12.2022 KR 20220176329
(71) Applicant: Samsung Electronics Co., Ltd., Suwon-si, Gyeonggi-do 16677 (KR)
(72) Inventor: PARK, Jiyong, Suwon-si Gyeonggi-do 16677 (KR); CHO, Younghoon, Suwon-si Gyeonggi-do 16677 (KR); LEE, Joohyun, Suwon-si Gyeonggi-do 16677 (KR); CHEONG, Seongkoo, Suwon-si Gyeonggi-do 16677 (KR)
(74) Representative: Appleyard Lees IP LLP
(86) International application number: PCT/KR2023/019878
(87) International publication number: WO 2024/128666

(57) **Abstract**

A display apparatus is disclosed. The display apparatus comprises a display panel including multiple display modules and one or more processors that control the display panel to display an image including multiple image frames and control the multiple display modules to display dither masks corresponding to the multiple image frames, respectively, wherein, when one image frame among the multiple image frames is received, each of the multiple display modules identifies a dither mask corresponding to the one image frame and displays a partial image corresponding to the one image frame and the identified dither mask.

## Description

### [Technical Field]

The disclosure relates to a display apparatus and a control method thereof, and more particularly, to a display apparatus that applies a dither mask to an image frame, and a control method thereof.

### [Background Art]

Recently, there is a trend that display apparatuses in various forms are being developed and distributed.

In particular, as display apparatuses have become bigger and their resolutions have become higher, the number of display modules constituting a display apparatus is increasing in proportion thereto.

For reasons such as the luminance and the cost, etc., display apparatuses operating by a passive matrix method are being mainly developed and distributed.

Such a PM method has a disadvantage that the minimum light emission amount is higher compared to a display apparatus operating by an active matrix method, and for offsetting such a disadvantage, various dither methods are being used.

A temporal dither method is used as one of various dither methods, but the temporal dither method has a problem that a flicker is generated while a display apparatus is being driven, and the like.

Accordingly, there has been a demand for development of a temporal dither method that is optimized for a display apparatus operating by a PM method.

### [Disclosure]

### [Technical Solution]

According to an embodiment of the disclosure for achieving the aforementioned purpose, a display apparatus includes a display panel including a plurality of display modules, and at least one processor configured to control the display panel to display an image including a plurality of image frames, and control each of the plurality of display modules to display dither masks corresponding to each of the plurality of image frames, wherein each of the plurality of display modules may, based on receiving any one image frame among the plurality of image frames, identify a dither mask corresponding to the any one image frame, and display a partial image corresponding to the any one image frame and the identified dither mask.

According to an embodiment of the disclosure for achieving the aforementioned purpose, a control method of a display apparatus includes the steps of controlling the plurality of display modules to display an image including a plurality of image frames, and controlling each of the plurality of display modules to display dither masks corresponding to each of the plurality of image frames, wherein the step of controlling to display the dither masks may include the steps of, based on receiving any one image frame among the plurality of image frames, identifying a dither mask corresponding to the any one image frame by each of the plurality of display modules, and displaying a partial image corresponding to the any one image frame and the identified dither mask.

According to an embodiment of the disclosure for achieving the aforementioned purpose, in a computer-readable recording medium including a program executing a control method of a display apparatus, the control method of a display apparatus includes the steps of controlling a plurality of display modules to display an image including a plurality of image frames, and controlling each of the plurality of display modules to display dither masks corresponding to each of the plurality of image frames, and the step of controlling to display the dither masks includes the steps of, based on receiving any one image frame among the plurality of image frames, identifying a dither mask corresponding to the any one image frame by each of the plurality of display modules, and displaying a partial image corresponding to the any one image frame and the identified dither mask.

### [Description of Drawings]

FIG. 1 is a diagram for illustrating a display apparatus displaying an image according to an embodiment of the disclosure;
FIG. 2 is a diagram for illustrating a display apparatus wherein a plurality of display modules are combined according to an embodiment of the disclosure;
FIG. 3 is a block diagram for illustrating a display apparatus according to an embodiment of the disclosure;
FIG. 4 is a diagram for illustrating dither masks according to an embodiment of the disclosure;
FIG. 5 is a diagram for illustrating flickers due to dither masks according to an embodiment of the disclosure;
FIG. 6 is a diagram for illustrating a reference signal according to an embodiment of the disclosure; and
FIG. 7 is a flow chart for illustrating a control method of a display apparatus according to an embodiment of the disclosure.

### [Mode for Invention]

First, terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, or alternatives of the embodiments included in the ideas and the technical scopes disclosed herein. Meanwhile, in case it is determined that in describing embodiments, detailed explanation of related known technologies may confuse the gist of the disclosure, the detailed explanation will be omitted.

In addition, terms such as "first," "second," and the like may be used to describe various elements, but the terms are not intended to limit the elements. Such terms are used only to distinguish one element from another element.

Further, singular expressions include plural expressions, unless defined obviously differently in the context. Also, in the disclosure, terms such as "include" or "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, "a module" or "a part" performs at least one function or operation, and may be implemented as hardware or software, or as a combination of hardware and software. Also, a plurality of "modules" or "parts" may be integrated into at least one module and implemented as at least one processor (not shown), except "a module" or "a part" that needs to be implemented as specific hardware.

Hereinafter, the embodiments of the disclosure will be described in detail with reference to the accompanying drawings, such that those having ordinary skill in the art to which the disclosure belongs can easily carry out the disclosure. However, it should be noted that the disclosure may be implemented in various different forms, and is not limited to the embodiments described herein. Also, in the drawings, parts that are not related to explanation were omitted, for explaining the disclosure clearly, and throughout the specification, similar components were designated by similar reference numerals.

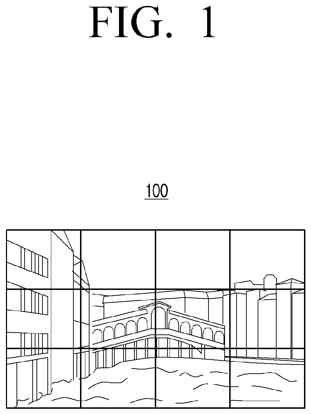

FIG. 1 is a diagram for illustrating a display apparatus displaying an image according to an embodiment of the disclosure.

Referring to FIG. 1, the display apparatus 100 may consist of a plurality of display modules 110-1, ..., 110-n. The display apparatus 100 may display video data. The display apparatus 100 may be implemented as a TV, but is not limited thereto, and any apparatus equipped with a display function such as a video wall, a large format display (LFD), digital signage, a digital information display (DID), a projector display, etc. can be applied without limitation. Also, the display apparatus 100 may be implemented as displays in various forms such as a liquid crystal display (LCD), organic light-emitting diodes (OLEDs), liquid crystal on silicon (LCoS), digital light processing (DLP), a quantum dot (QD) display panel, quantum dot light-emitting diodes (QLEDs), etc.

According to an embodiment, the display apparatus 100 may be implemented as a form of a modular display including a plurality of display modules 110-1, ..., 110-n.

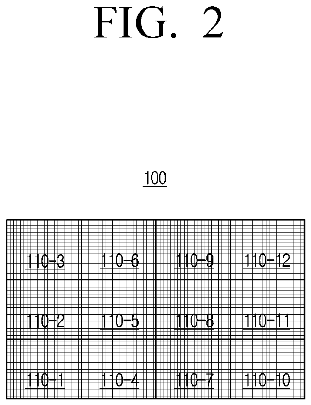

FIG. 2 is a diagram for illustrating a display apparatus wherein a plurality of display modules are combined according to an embodiment of the disclosure.

For example, as illustrated in FIG. 2, the plurality of display modules 110-1, ..., 110-n may be combined and implement one display apparatus (i.e., the display apparatus 100).

Each of the plurality of display modules 110-1, ..., 110-n according to an embodiment of the disclosure may include a plurality of self-emitting diodes. Here, the self-emitting diodes may be at least one of light-emitting diodes (LEDs) or micro LEDs.

Also, each of the plurality of display modules 110-1, ..., 110-n may be implemented as an LED cabinet including a plurality of light-emitting diodes (LEDs). Here, the LEDs may be implemented as RGB LEDs, and the RGB LEDs may include a red LED, a green LED, and a blue LED. Also, the LEDs may additionally include a white LED other than the RGB LEDs.

According to an embodiment, LEDs may be implemented as micro LEDs. Here, micro LEDs are LEDs in a size of about 5 - 100 micrometers, and they are micro-mini light emitting elements emitting light by themselves without a color filter.

According to an embodiment, each of the plurality of display modules 110-1, ..., 110-n included in the display apparatus 100 may be connected with each other. For example, at least one display module (e.g., a first display module 110-1) that received a control signal, video data, etc. from an external apparatus (e.g., a source apparatus) may transmit the received control signal, video data, etc. to another display module (e.g., a second display module 110-2) that is serially connected to it, and accordingly, the control signal, the video data, etc. may be sequentially transmitted to all of the plurality of display modules 110-1, ..., 110-n.

As another example, the at least one processor included in the display apparatus 100 may, based on location information of each of the plurality of display modules 110-1, ..., 110-n, transmit a control signal, video data, etc. corresponding to the locations to each of the plurality of display modules 110-1, ..., 110-n. Accordingly, the display apparatus 100 may output an image corresponding to the video data received from the external apparatus.

Meanwhile, according to an embodiment, each of the plurality of display modules 110-1, ..., 110-n may operate by a passive matrix method.

Here, the passive matrix method is a method wherein at least one driver IC sequentially provides a scan signal to a plurality of scan lines, and the at least one driver IC applies data to pixels corresponding to a scan line to which the scan signal is provided among the plurality of scan lines by using a plurality of data lines.

The minimum light emission amount of LEDs according to the passive matrix method may be relatively higher than the minimum light emission amount of LEDs according to an active matrix method.

Accordingly, the display apparatus 100 according to the passive matrix method may dither an image by using a dither mask for reducing the minimum light emission amount of the LEDs, and then output the image.

Dithering according to an embodiment may include temporal dithering and static dithering.

The temporal dithering according to an embodiment of the disclosure may alternatingly output a relatively bright pixel and a relatively dark pixel in units of image frames. For example, the display apparatus 100 may perform dithering in a first image frame by using a first dither mask, and perform dithering in a second image frame by using a second dither mask.

According to an embodiment, when each of the plurality of display modules 110-1, ..., 110-n dithers an image frame by using a different dither mask in the same image frame and then outputs the frame, frequency fluctuation becomes big within the dithered image frame, or frequency fluctuation between image frames becomes big, and there is a problem that a flicker phenomenon is generated while a plurality of image frames are being output.

For example, if the first display module 110-1 performs dithering by using the first dither mask, and the second display module 110-2 performs dithering by using the second dither mask in the first image frame, there is a problem that a flicker phenomenon (e.g., flickering of some areas within the image frame, or flickering of some areas when the image frame is converted) is generated while the first image frame is being output.

Accordingly, each of the plurality of display modules 110-1, ..., 110-n according to an embodiment of the disclosure may dither an image frame by using the same dither mask in units of image frames, and then output the frame.

For example, each of the first display module 110-1 and the second display module 110-2 may perform dithering by using the first dither mask in the first image frame, and each of the first display module 110-1 and the second display module 110-2 may perform dithering by using the second dither mask in the second image frame. Accordingly, a flicker phenomenon may not be generated while the display apparatus 100 outputs a plurality of image frames, and grayscale linearity may be improved.

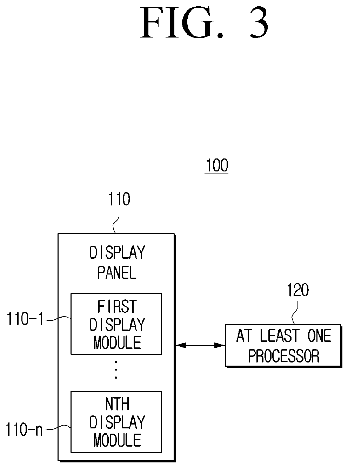

Detailed explanation in this regard will be described with reference to FIG. 3.

FIG. 3 is a block diagram for illustrating a configuration of an electronic apparatus according to an embodiment of the disclosure.

According to FIG. 3, the display apparatus 100 includes a display panel 110 and at least one processor 120.

The display panel 110 according to an embodiment includes a plurality of display modules 110-1, ..., 110-n. Each of the plurality of display modules 110-1, ..., 110-n may include, for example, a controller (e.g., a timing controller (TCON)).

According to an embodiment, the controller may control overall operations of a corresponding display module.

For example, the controller may sequentially receive a plurality of image frames and reference signals corresponding to each of the plurality of image frames from the at least one processor 120 included in the display apparatus 100.

Then, the controller may identify a dither mask corresponding to the reference signal among the plurality of dither masks, and control a corresponding display module to dither an image frame by using the identified dither mask, and then output the frame.

The at least one processor 120 according to an embodiment of the disclosure controls the overall operations of the display apparatus 100.

According to an embodiment of the disclosure, the at least one processor may be implemented as a digital signal processor (DSP) processing digital signals, a microprocessor, and a timing controller (TCON). However, the disclosure is not limited thereto, and the at least one processor may include one or more of a central processing unit (CPU), a micro controller unit (MCU), a micro processing unit (MPU), a controller, an application processor (AP) or a communication processor (CP), an ARM processor, and an artificial intelligence (AI) processor, or may be defined by the terms. Also, the at least one processor may be implemented as a system on chip (SoC) having a processing algorithm stored therein or large scale integration (LSI), or in the form of a field programmable gate array (FPGA). The at least one processor may perform various functions by executing computer executable instructions stored in the memory.

The at least one processor may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the electronic apparatus, and perform an operation related to communication or data processing. Also, the at least one processor may execute one or more programs or instructions stored in the memory. For example, the at least one processor may perform the method according to an embodiment of the disclosure by executing the one or more instructions stored in the memory.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor may be implemented as a single core processor including one core, or may be implemented as one or more multicore processors including a plurality of cores (e.g., multi cores of the same kind or multicores of different kinds). In case the at least one processor is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

First, the at least one processor 120 according to an embodiment of the disclosure controls the display panel 110 to display an image including a plurality of image frames.

According to an embodiment, the at least one processor 120 may control each of the plurality of display modules 110-1, ..., 110-n to display dither masks corresponding to each of the plurality of image frames.

For example, the at least one processor 120 may sequentially transmit the plurality of image frames and reference signals corresponding to each of the plurality of image frames to each of the plurality of display modules 110-1, ..., 110-n.

Here, the reference signals may correspond to information on the number of times that the at least one processor 120 transmitted the image frames to each of the plurality of display modules 110-1, ..., 110-n.

For example, the at least one processor 120 may include a frame counter, and count the number of transmission of image frames by using the frame counter while transmitting a plurality of image frames constituting an image to each of the plurality of display modules 110-1, ..., 110-n. Then, the at least one processor 120 may transmit the image frames and the reference signals including the number of transmission corresponding to the image frames to each of the plurality of display modules 110-1, ..., 110-n.

Then, when the reference signals are received, each of the plurality of display modules 110-1, ..., 110-n may identify a dither mask corresponding to the reference signal among the plurality of dither masks, and dither the received image frame by using the identified dither mask, and then output the frame.

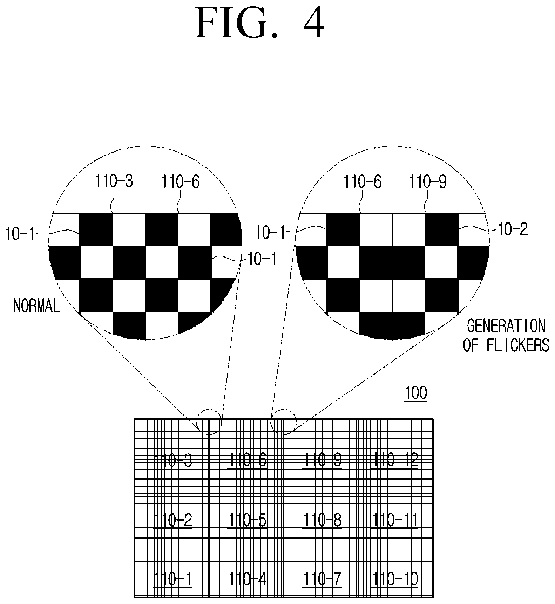

Detailed explanation in this regard will be described with reference to FIG. 4.

FIG. 4 is a diagram for illustrating dither masks according to an embodiment of the disclosure.

Referring to FIG. 4, according to an embodiment, the third display module 110-3 among the plurality of display modules 110-1, ..., 110-n may perform dithering by using the first dither mask 10-1, and the sixth display module 110-6 adjacent to the third display module 110-3 may also perform dithering by using the first dither mask 10-1.

In contrast, the sixth display module 110-6 may perform dithering by using the first dither mask 10-1, and the ninth display module 110-9 adjacent to the sixth display module 110-6 may also perform dithering by using the second dither mask 10-2.

If the plurality of display modules 110-1, ..., 110-n perform dithering by using different dither masks but not the same dither mask, flickers may be generated on the boundaries among the display modules. Referring to FIG. 4, the sixth display module 110-6 and the ninth display module 110-9 perform dithering by using different dither masks, and thus frequency fluctuation becomes big on the boundary between the sixth display module 110-6 and the ninth display module 110-9, and a flicker may be generated.

The disclosure includes various embodiments wherein, while one image frame is being output, in order that the plurality of display modules 110-1, ..., 110-n perform dithering by using the same dither mask, the at least one processor 120 transmits reference signals to each of the plurality of display modules 110-1, ..., 110-n, and each of the plurality of display modules 110-1, ..., 110-n identifies a dither mask corresponding to the reference signal, and then performs dithering by using the identified dither mask.

The plurality of display modules 110-1, ..., 110-n according to the disclosure perform dithering by using the same dither mask while one image frame is being output, and thus flickers may not be generated on the boundaries among the plurality of display modules 110-1, ..., 110-n, and grayscale linearity may be improved.

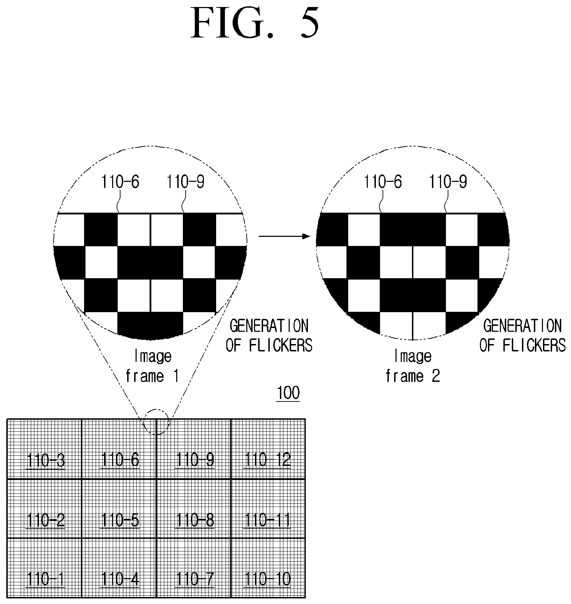

FIG. 5 is a diagram for illustrating flickers due to dither masks according to an embodiment of the disclosure.

If the plurality of display modules 110-1, ..., 110-n perform dithering by using different dither masks but not the same dither mask, flickers may be generated while a plurality of image frames are being output, i.e., when the image frame is converted.

Referring to FIG. 5, the sixth display module 110-6 and the ninth display module 110-9 perform dithering by using different dither masks, and thus a flicker may be generated when the image frame 1 is converted to the image frame 2.

In the disclosure, the dither masks that are used by the plurality of display modules 110-1, ..., 110-n for dithering are changed in units of image frames, and thus a flicker may not be generated when the image frame output by the display panel 110 is converted.

Meanwhile, in FIG. 4 and FIG. 5, the first dither mask is assumed as a dither mask that performs dithering such that the pixels on the upper left end and the lower right end among the four pixels output relatively dark pixels, and the pixels on the upper right end and the lower left end output relatively bright pixels, and the second dither mask is assumed as a dither mask that performs dithering such that the pixels on the upper left end and the lower right end among the four pixels output relatively bright pixels, and the pixels on the upper right end and the lower left end output relatively dark pixels, but this is merely an example, and the disclosure is obviously not limited thereto.

For example, a dither mask may include at least two color pixels, and include a dither pattern of a predetermined size. Here, the number of colors (black, white, or gray) constituting the dither mask or the composition of the colors, the number of pixels constituting the dither mask, the dither pattern, etc. can obviously be changed variously.

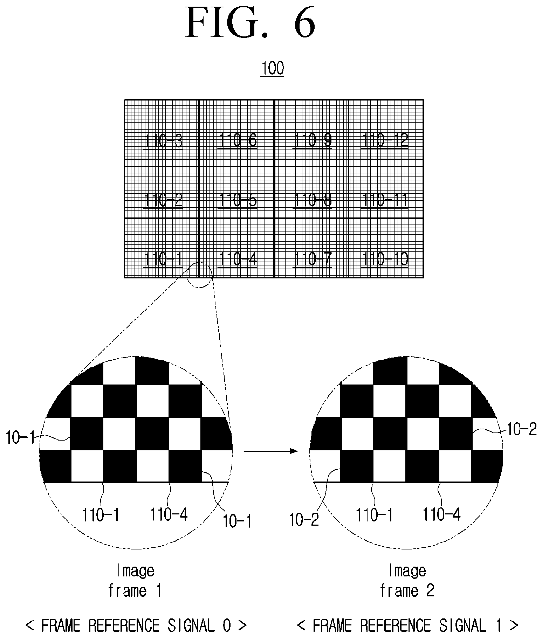

FIG. 6 is a diagram for illustrating a reference signal according to an embodiment of the disclosure.

Referring to FIG. 6, the at least one processor 120 may sequentially transmit a plurality of image frames constituting an image to each of the plurality of display modules 110-1, ..., 110-n. Here, the at least one processor 120 may also transmit reference signals corresponding to each of the plurality of image frames.

As an example, the at least one processor 120 may transmit the first image frame among the plurality of image frames to each of the plurality of display modules 110-1, ..., 110-n, and also transmit a reference signal corresponding to the first image frame (e.g., a frame reference signal 0) (referred to as a first reference signal hereinafter) together.

Then, when the first image frame and the first reference signal are received, the controller included in each of the plurality of display modules 110-1, ..., 110-n may apply the first dither mask 10-1 corresponding to the first reference signal from among the first dither mask 10-1 and the second dither mask 10-2 to the first image frame.

For example, the controller included in each of the plurality of display modules 110-1, ..., 110-n may apply the first dither mask 10-1 to some corresponding images (or, a partial image) in the first image frame, and then output the frame.

Then, the at least one processor 120 may transmit the second image frame among the plurality of image frames to each of the plurality of display modules 110-1, ..., 110-n, and also transmit a reference signal corresponding to the second image frame (e.g., a frame reference signal 1) (referred to as a second reference signal hereinafter) together.

According to an embodiment, when the second image frame and the second reference signal are received, the controller included in each of the plurality of display modules 110-1, ..., 110-n may apply the second dither mask 10-2 corresponding to the second reference signal from among the first dither mask 10-1 and the second dither mask 10-2 to the second image frame.

For example, the controller included in each of the plurality of display modules 110-1, ..., 110-n may apply the second dither mask 10-2 to some corresponding images (or, a partial image) in the second image frame, and then output the frame.

According to an embodiment, each of the plurality of display modules 110-1, ..., 110-n may alternatingly (or, alternately) apply the first dither mask 10-1 and the second dither mask 10-2 to a plurality of image frames sequentially received from the at least one processor 120 in units of image frames.

Referring to FIG. 6, according to an embodiment, the first display module 110-1 among the plurality of display modules 110-1, ..., 110-n may perform dithering by using the first dither mask 10-1, and the fourth display module 110-4 adjacent to the first display module 110-1 may also perform dithering by using the first dither mask 10-1.

While any one image frame is being output, the plurality of display modules 110-1, ..., 110-n perform dithering by using the same dither mask, and thus flickers may not be generated on the boundaries among the display modules.

Also, the dither mask used by the first display module 110-1 and the fourth display module 110-4 for dithering is changed in units of image frames, and thus a flicker may not be generated when the image frame output by the display panel 110 is converted from the image frame 1 to the image frame 2.

While any one image frame is being output, if the dither masks used by each of the plurality of display modules 110-1, ..., 110-n for dithering are different, the at least one processor 120 according to an embodiment of the disclosure may re-count the number of transmission of image frames by using the frame counter. Accordingly, the at least one processor 120 may re-obtain the reference signals.

Then, the at least one processor 120 may transmit the image frames and the re-obtained reference signals to each of the plurality of display modules 110-1, ..., 110-n, and each of the plurality of display modules 110-1, ..., 110-n may perform dithering by using the same dither mask while any one image frame received from the at least one processor 120 is being output.

Also, while any one display module is performing dithering by using the first dither mask 10-1, if another display module adjacent to the any one display module performs dithering by using the second dither mask 10-2, the controller included in the any one display module among the plurality of display modules 110-1, ..., 110-n may re-identify a dither mask corresponding to any one image frame based on the reference signal.

For example, if any one display module is performing dithering by using a different dither mask from another display module located near, the any one display module may re-identify a dither mask based on the reference signal. Then, the any one display module may apply the re-identified dither mask to a partial image corresponding to any one image frame, and then output the frame.

According to various embodiments of the disclosure, the plurality of display modules 110-1, ..., 110-n perform dithering by using the same dither mask, and change the dither mask in units of frames, and thus there is an effect that flickers that may be generated on the boundaries of the plurality of display modules 110-1, ..., 110-n, or flickers that may be generated when the image frame is converted can be prevented.

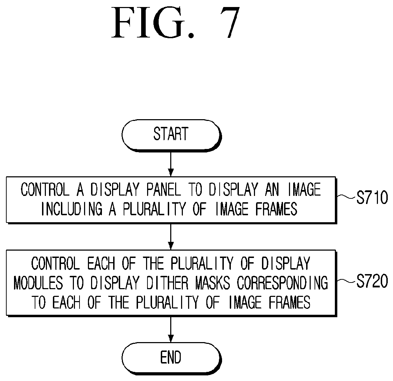

FIG. 7 is a flow chart for illustrating a control method of a display apparatus according to an embodiment of the disclosure.

According to an embodiment of the disclosure for achieving the aforementioned purpose, in a control method of a display apparatus, first, a plurality of display modules are controlled to display an image including a plurality of image frames in the step S710.

Then, each of the plurality of display modules is controlled to display dither masks corresponding to each of the plurality of image frames in the step S720.

Here, the step S720 of controlling to display the dither masks includes the steps of, based on receiving any one image frame among the plurality of image frames, identifying a dither mask corresponding to the any one image frame by each of the plurality of display modules, and displaying a partial image corresponding to the any one image frame and the identified dither mask.

The control method according to an embodiment of the disclosure may further include the step of sequentially transmitting the plurality of image frames and reference signals corresponding to each of the plurality of image frames to each of the plurality of display modules, and the step of identifying the dither mask may include the step of, based on receivin g the any one image frame and a reference signal corresponding to the any one image frame, identifying the dither mask on the basis of the reference signal.

The step of identifying the dither mask according to an embodiment of the disclosure may include the step of identifying the dither mask corresponding to the reference signal among the plurality of dither masks by controllers included in each of the plurality of display modules.

The plurality of dither masks according to an embodiment may include a first dither mask and a second dither mask which are temporal, and the control method according to an embodiment may include the steps of, based on receiving a first image frame among the plurality of image frames and a first reference signal corresponding to the first image frame, applying the first dither mask corresponding to the first reference signal to a partial image corresponding to the first image frame by each of the plurality of controllers, and based on receiving a second image frame among the plurality of image frames and a second reference signal corresponding to the second image frame, applying the second dither mask corresponding to the second reference signal to a partial image corresponding to the second image frame by each of the plurality of controllers.

The reference signal according to an embodiment of the disclosure may correspond to information on the number of times that the any one processor transmitted the image frames constituting the image to each of the plurality of display modules, and the control method according to an embodiment may include the step of alternatingly applying the first dither mask and the second dither mask according to the information on the number of times by each of the plurality of controllers.

The control method according to an embodiment of the disclosure may further include the step of, while a first display module is displaying a first dither mask, if a second display module adjacent to the first display module displays a second dither mask, re-identifying a dither mask corresponding to any one image frame based on the reference signal by a first controller included in the first display module among the plurality of display modules.

The control method according to an embodiment of the disclosure may further include the step of displaying a partial image corresponding to the any one image frame and the re-identified dither mask by the first controller.

The dither mask according to an embodiment may include at least two color pixels, and have a dither pattern of a predetermined size.

Each of the plurality of display modules according to an embodiment of the disclosure may operate by a passive matrix method.

Meanwhile, the various embodiments of the disclosure can obviously be applied not only to a display apparatus, but also to electronic apparatuses of all types including a display.

Meanwhile, the aforementioned various embodiments may be implemented in a recording medium that is readable by a computer or a apparatus similar thereto, by using software, hardware, or a combination thereof. In some cases, the embodiments described in this specification may be implemented as a processor itself. According to implementation by software, the embodiments such as procedures and functions described in this specification may be implemented as separate software modules. Each of the software modules may perform one or more functions and operations described in this specification.

Meanwhile, computer instructions for performing processing operations of an electronic apparatus according to the aforementioned various embodiments of the disclosure may be stored in a non-transitory computer-readable medium. Computer instructions stored in such a non-transitory computer-readable medium make the processing operations at the electronic apparatus according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disk, a blue-ray disk, a USB, a memory card, ROM and the like.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A display apparatus comprising:
a display panel including a plurality of display modules; and
at least one processor configured to:
control the display panel to display an image including a plurality of image frames, and
control each of the plurality of display modules to display dither masks corresponding to each of the plurality of image frames,
wherein each of the plurality of display modules is configured to:
based on receiving any one image frame among the plurality of image frames, identify a dither mask corresponding to the any one image frame, and
display a partial image corresponding to the any one image frame and the identified dither mask.

2. The display apparatus of claim 1,
wherein the at least one processor is configured to:
sequentially transmit the plurality of image frames and reference signals corresponding to each of the plurality of image frames to each of the plurality of display modules, and
each of the plurality of display modules is configured to:
based on receiving the any one image frame and a reference signal corresponding to the any one image frame from the at least one processor, identify the dither mask on the basis of the reference signal.

3. The display apparatus of claim 2,
wherein each of the plurality of display modules comprises:
a controller controlling a corresponding display module, and
each of the plurality of controllers is configured to:
based on receiving the reference signal from the at least one processor, identify the dither mask corresponding to the reference signal among the plurality of dither masks, and
display the partial image corresponding to the any one image frame and the identified dither mask.

4. The display apparatus of claim 3,
wherein the plurality of dither masks comprise:
a first dither mask and a second dither mask which are temporal, and
each of the plurality of controllers is configured to:
based on receiving a first image frame among the plurality of image frames and a first reference signal corresponding to the first image frame, apply the first dither mask corresponding to the first reference signal to a partial image corresponding to the first image frame, and
based on receiving a second image frame among the plurality of image frames and a second reference signal corresponding to the second image frame, apply the second dither mask corresponding to the second reference signal to a partial image corresponding to the second image frame.

5. The display apparatus of claim 4,
wherein the reference signal corresponds to information on the number of times that the any one processor transmitted the image frames constituting the image to each of the plurality of display modules, and
each of the plurality of controllers is configured to:
alternatingly apply the first dither mask and the second dither mask according to the information on the number of times.

6. The display apparatus of claim 3,
wherein a first controller included in a first display module among the plurality of display modules is configured to:
based on a second display module adjacent to the first display module displaying the second dither mask while the first display module is display the first dither mask, re-identify a dither mask corresponding to the any one image frame on the basis of the reference signal.

7. The display apparatus of claim 6,
wherein the first controller is configured to:
display the partial image corresponding to the any one image frame and the re-identified dither mask.

8. The display apparatus of claim 1,
wherein the dither mask comprises at least two color pixels, and has a dither pattern of a predetermined size.

9. The display apparatus of claim 1,
wherein each of the plurality of display modules operates by a passive matrix method.

10. A control method of a display apparatus comprising a plurality of display modules, the method comprising:
controlling the plurality of display modules to display an image including a plurality of image frames; and
controlling each of the plurality of display modules to display dither masks corresponding to each of the plurality of image frames,
wherein the controlling to display the dither masks comprises:
based on receiving any one image frame among the plurality of image frames, identifying a dither mask corresponding to the any one image frame by each of the plurality of display modules; and
displaying a partial image corresponding to the any one image frame and the identified dither mask.

11. The control method of claim 10, further comprising:
sequentially transmitting the plurality of image frames and reference signals corresponding to each of the plurality of image frames to each of the plurality of display modules,
wherein the identifying the dither mask comprises:
based on receiving the any one image frame and a reference signal corresponding to the any one image frame, identifying the dither mask on the basis of the reference signal.

12. The control method of claim 11,
wherein the identifying the dither mask comprises:
identifying the dither mask corresponding to the reference signal among the plurality of dither masks by controllers included in each of the plurality of display modules.

13. The control method of claim 12,
wherein the plurality of dither masks comprise:
a first dither mask and a second dither mask which are temporal, and
the method comprises:
based on receiving a first image frame among the plurality of image frames and a first reference signal corresponding to the first image frame, applying the first dither mask corresponding to the first reference signal to a partial image corresponding to the first image frame by each of the plurality of controllers; and
based on receiving a second image frame among the plurality of image frames and a second reference signal corresponding to the second image frame, applying the second dither mask corresponding to the second reference signal to a partial image corresponding to the second image frame by each of the plurality of controllers.

14. The control method of claim 13,
wherein the reference signal corresponds to information on the number of times that the any one processor of the display apparatus transmitted the image frames constituting the image to each of the plurality of display modules, and
the method comprises:
alternatingly applying the first dither mask and the second dither mask according to the information on the number of times by each of the plurality of controllers.

15. A computer-readable recording medium including a program executing a control method of a display apparatus,
wherein the control method of a display apparatus comprises:
controlling a plurality of display modules to display an image including a plurality of image frames; and
controlling each of the plurality of display modules to display dither masks corresponding to each of the plurality of image frames, and
the controlling to display the dither masks comprises:
based on receiving any one image frame among the plurality of image frames, identifying a dither mask corresponding to the any one image frame by each of the plurality of display modules; and
displaying a partial image corresponding to the any one image frame and the identified dither mask.
